# EUROPEAN PATENT APPLICATION

(11) **EP 4 804 376 A1**
(43) Date of publication of application: **09.09.2026**
(21) Application number: 25785453.9
(22) Date of filing: 25.02.2025
(51) Int. Cl.: H02J 7/00, H01M 10/42, H02H 7/18

(54) **HIGH-VOLTAGE BOX, AND ELECTRICAL CONTROL SYSTEM AND METHOD FOR ENERGY STORAGE BATTERY CLUSTER**

(30) Priority: 07.04.2024 CN 202410412839
(71) Applicant: Zhongtian Energy Storage Technology Co., Ltd, Nantong, Jiangsu 226000 (CN)
(72) Inventor: PENG, Chenhui, Nantong, Jiangsu 226000 (CN); ZHAO, Jing, Nantong, Jiangsu 226000 (CN); FAN, Hongjun, Nantong, Jiangsu 226000 (CN); LU, Qingqing, Nantong, Jiangsu 226000 (CN)
(74) Representative: Cameron Intellectual Property Ltd
(86) International application number: PCT/CN2025/079080
(87) International publication number: WO 2025/213972

(57) **Abstract**

Provided in the present application are a high-voltage box, and an electrical control system and method for an energy storage battery cluster. The high-voltage box comprises a main positive circuit, a main negative circuit and a pre-charging circuit, and further comprises a pre-charging resistor and an integrated switch, wherein the integrated switch is provided with a first contact, a second contact, a third contact and a fourth contact; the first contact is connected to the main positive circuit, and the second contact and the fourth contact are connected in parallel and then connected to the main negative circuit; the pre-charging resistor and the third contact are connected in series in the pre-charging circuit, and the pre-charging circuit is connected across the first contact in parallel; and the first contact and the second contact are interlocked, and the third contact and the fourth contact are also interlocked. The high-voltage box of the present application reduces the number of components, thereby also reducing the cost.

## Description

### Technical Field

The present application relates to the technical field of energy storage, and in particular to a high-voltage box, an electrical control system and method for energy storage battery clusters.

### Background Art

With the rapid development of new energy vehicles and energy storage technologies, battery clusters, as key energy storage units, are receiving increasing attention for their safety, reliability, and efficiency.

The high-voltage box, as the core component connecting the battery clusters and the energy storage converter, plays a crucial role in power transmission, control, and protection. In primary circuit design of a traditional high-voltage box, multiple electrical components are included, such as circuit breakers, main positive contactors, main negative contactors, pre-charge contactors, fuses, and pre-charge resistors. Each of these components performs important functions, including electrical isolation, on/off control, short-circuit protection, and pre-charging.

However, traditional high-voltage boxes have a large number of (usually six or more) components, which directly leads to an increase in the cost of the high-voltage box. In addition, the numerous components occupy a large installation space, and the complex connection of multiple components also increases the failure rate and maintenance difficulty of the system.

### Summary of the Invention

The present application provides a high-voltage box, an electrical control system and method for energy storage battery clusters, to address the problems of numerous components and high cost of the high-voltage boxes in prior art.

In a first aspect, the present application provides a high-voltage box, comprising: a main positive circuit, a main negative circuit, and a pre-charge circuit, and the the high-voltage box comprises a pre-charge resistor and an integrated switch;
The integrated switch is provided with a first contact, a second contact, a third contact, and a fourth contact;
The first contact is connected to the main positive circuit, the second contact and the fourth contact are connected in parallel and then connected to the main negative circuit;
The pre-charge resistor and the third contact are connected in series in the pre-charge circuit, and the pre-charge circuit is connected in parallel to the two terminals of the first contact;
The first contact and the second contact are linked, and the third contact and the fourth contact are linked.

In some examples, a first fuse is connected in series to the main positive circuit; and a second fuse is connected in series to the main negative circuit.

In some examples, the first contact, the second contact, the third contact, and the fourth contact are all mechanical contacts.

In some examples, a shunt is connected in series to the main negative circuit.

In some examples, a Hall sensor is connected in series to the main negative circuit.

In a second aspect, the present application provides an electrical control system for energy storage battery clusters, comprising: battery clusters a high-voltage box, and an energy storage converter connected in sequence. The high-voltage box comprises a main positive circuit, a main negative circuit, and a pre-charge circuit, and the high-voltage box comprises a pre-charge resistor and an integrated switch;

The integrated switch is provided with a first contact, a second contact, a third contact, and a fourth contact;
The first contact is connected to the main positive circuit, the second contact and the fourth contact are connected in parallel and then connected to the main negative circuit;
The pre-charge resistor and the third contact are connected in series in the pre-charge circuit, and the pre-charge circuit is connected in parallel to the two terminals of the first contact;
The first contact and the second contact are linked, and the third contact and the fourth contact are linked.

In a third aspect, the present application provides an electrical control method for energy storage battery clusters, which is applied to the electrical control system for energy storage battery clusters according to the second aspect, and the method comprises:
Determining the voltage difference between the highest voltage and the lowest voltage of the total voltages of battery clusters; and
Closing the first contact and the second contact when the voltage difference is less than or equal to a first preset threshold.

In some examples, the method further comprises:
When the voltage difference is greater than the first preset threshold and less than a second preset threshold, breaking the first contact and the second contact, and closing a third contact and a fourth contact, until the voltage difference is less than or equal to the first preset threshold; then closing the first contact and the second contact, and after a present time, breaking the third contact and the fourth contact.

In some examples, after closing the third contact and the fourth contact, the method further comprises:
Disconnecting the third contact and the fourth contact when it is determined that pre-charging has failed.

In some examples, after closing the first contact and the second contact, the method further comprises:
Disconnecting the first contact and the second contact when it is determined that a fault of the electrical control system for energy storage battery clusters has occurred.

### Beneficial Effects

In the high-voltage box, the electrical control system and method for energy storage battery clusters provided by the present application, an integrated switch is provided to replace the circuit breaker, main positive contactor, main negative contactor, and pre-charge contactor in traditional high-voltage boxes, thus reducing the number of components in the high-voltage box, lowering costs, and improves wiring efficiency while maintaining the original functions of the high-voltage box.

### Description of Drawings

To more clearly illustrate the technical solutions in the present application or the prior art, the accompanying drawings used for describing the examples or the prior art will be briefly introduced below. Obviously, the drawings described below are some examples of the present application. Those of ordinary skills in the art can obtain other drawings based on these drawings without expending creative effort.
FIG. 1 is a schematic structural diagram of a high-voltage box in the prior art;
FIG. 2 is a schematic structural diagram of a high-voltage box provided in an example of the present application; and
FIG. 3 is a schematic structural diagram of another high-voltage box provided in an example of the present application.

### Reference Numerals:

10 - main positive circuit;
11 - first fuse;
12 - main positive contactor;
20 - main negative circuit;
21 - second fuse;
22 - shunt;
23 - main negative contactor;
24 - hall sensor;
30 - pre-charge circuit;
31 - pre-charge resistor;
32 - pre-charge contactor;
40 - circuit breaker;
50 - integrated switch;
51 - first contact;
52 - second contact;
53 - third contact;
54 - fourth contact.

### Detailed Description of Embodiments

To make the objectives, technical solutions, and advantages of the present application clearer, the technical solutions of the present application will be clearly and completely described below with reference to the accompanying drawings of the present application. Obviously, the described examples are only some examples of the present application, not all examples. Based on the examples of the present application, all other examples obtained by those of ordinary skills in the art without expending creative effort fall into the protection scope of the present application.

The terms such as "first", "second" used in the specification, claims, and accompanying drawings of the present application are used to distinguish similar objects and are not necessarily used to describe a specific order or sequence. It should be understood that the data used as such can be used interchangeably where appropriate. For example, without departing from the scope of the present invention, a first information can also be referred to as a second information, and similarly, a second information can also be referred to as a first information.

It should be understood that the term "comprising" or "including" indicates the presence of features, steps, operations, elements, components, items, types, and/or groups, but do not exclude the presence, occurrence, or addition of one or more additional features, steps, operations, elements, components, items, types, and/or groups.

An energy storage system is a system capable of storing and supplying electrical energy, and possesses functions such as smoothing transition, peak shaving and valley filling, and frequency and voltage regulation. With the rapid development of the new energy industry, energy storage systems have been widely applied, especially in solar power generation and wind power generation, where they can smooth the output of electrical energy and reduce the impact of randomness, intermittency, and fluctuation on the power grid and users.

The high-voltage box, a key component of the energy storage system, acts as a bridge connecting the battery clusters and the energy storage converter. It is the management unit of the battery cluster's high-voltage power circuit, responsible not only for power transmission between the battery clusters and the energy storage converter, but also for collecting the voltage and current of the battery clusters, and controlling and protecting the battery cluster circuit.

The high-voltage box is designed with full consideration of the safety and stability requirements of the energy storage system. It employs advanced electrical connection technology to ensure an efficient and stable connection between the battery clusters and the energy storage converter, while minimizing energy loss. Furthermore, the high-voltage box has high-precision data collecting function, can monitor the battery cluster's voltage and current status in real time, and provides accurate operational data for the system.

In terms of control and protection, the high-voltage box can precisely control the charging/discharging process of the battery clusters according to the actual needs of the system, achieving optimized utilization of the energy. The high-voltage box also integrates multiple safety protection functions, such as overvoltage protection, overcurrent protection, and short-circuit protection, to ensure the safe and stable operation of the battery cluster circuit. These protective measures effectively prevent system damage or safety accidents caused by electrical faults, improving the overall reliability of the energy storage system.

With the rapid development of the new energy industry, the performance requirements for high-voltage boxes by energy storage systems are constantly increasing. In the future, the design of high-voltage boxes will focus more on efficiency, safety, and intelligence to meet the application needs of energy storage systems in larger-scale and more complex scenarios.

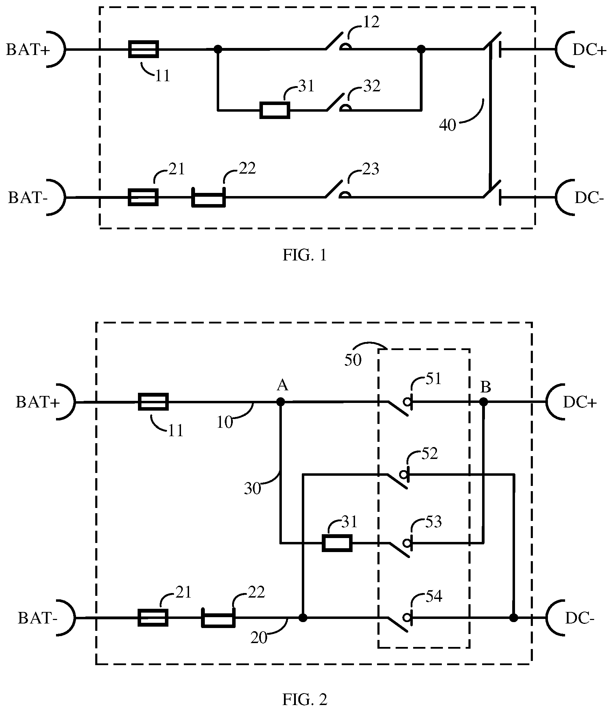

FIG. 1 is a schematic structural diagram of a high-voltage box in the prior art. As shown in FIG. 1, the components of the primary circuit of the high-voltage box comprises a circuit breaker 40, a main positive contactor 12, a main negative contactor 23, a pre-charge contactor 32, a pre-charge resistor 31, a positive fuse (i.e., a first fuse 11), and a negative fuse (i.e., a second fuse 21). The circuit breaker 40 is connected to the main positive circuit 10 and the main negative circuit 20 at the same time for electrical isolation, i.e., disconnecting or connecting the load circuit and disconnecting the fault circuit, preventing escalation of accident and ensuring safe operation. The main positive contactor 12 and the positive fuse are connected in series in the main positive circuit 10, the main negative contactor 23 and the negative fuse are connected in series in the main negative circuit 20, and the pre-charge contactor 32 and the pre-charge resistor 31 are connected in series and then connected in parallel to the two terminals of the main positive contactor 12. The main positive contactor 12 and the main negative contactor 23 are used to control the on/off of the primary circuit, that is, in combination with the Battery Management System (BMS), actively providing overcharge, overheat, and over-discharge protection; the pre-charge contactor 32 is configured to control the on/off of the pre-charge circuit 30; the positive fuse and the negative fuse are configured for short circuit protection.

The high-voltage boxes in prior art have the following problems:
First, there are a large number of components which directly increases the cost of the high-voltage box. The manufacturing, procurement, and installation of each component require additional costs, challenging the cost-effectiveness of the entire high-voltage box.
Second, the numerous components occupy significant installation space. In applications scenarios where there is a high requirement for container footprint, the size and weight of the high-voltage box become key factors limiting performance improvement thereof. An excessively large high-voltage box not only increases the overall weight of the container, but also wastes container space utilization.

Furthermore, due to the inherent structural characteristics of the contactor, it is prone to sticking when short-circuit currents, instantaneous high currents, or on-load breaking occur in the circuit, posing operational risks and incurring high replacement costs. Simultaneously, the complex connections of multiple components increase the system's failure rate and maintenance difficulty. The failure of any single component can affect the normal operation of the entire high-voltage box and even the entire energy storage system, increasing system instability and maintenance costs.

In view of the aforementioned problems, the present application provides a high-voltage box, an electrical control system and method for energy storage battery clusters. The high-voltage box is provided with an integrated switch 50 to replace some components in the traditional high-voltage box, thereby reducing the number of components in the high-voltage box and achieving the effects of reducing costs, simplifying circuit structure, and reducing installation space.

The technical solutions of the present application will be described in detail below with specific examples. These specific examples can be combined with each other, and the same or similar concepts or processes may not be repeated in some examples.

FIG. 2 is a schematic structural diagram of a high-voltage box provided in an example of the present application. As shown in FIG. 2, the high-voltage box comprises: a main positive circuit 10, a main negative circuit 20, and a pre-charge circuit 30, wherein, the main positive circuit 10 represents the line from the battery positive terminal (BAT+) to the DC positive direction (DC+), the main negative circuit 20 represents the line from the battery negative terminal (BAT-) to the DC negative direction (DC-), and the pre-charge circuit 30 represents the line from point A through the pre-charge resistor 31 and the third contact 53 to point B.

The high-voltage box comprises a pre-charge resistor 31 and an integrated switch 50; the integrated switch 50 is provided with a first contact 51, a second contact 52, a third contact 53, and a fourth contact 54.

The first contact 51 is connected to the main positive circuit 10, and the second contact 52 and the fourth contact 54 are connected in parallel and then connected to the main negative circuit 20. A pre-charge resistor 31 and the third contact 53 are connected in series in the pre-charge circuit 30, the pre-charge circuit 30 is connected in parallel to the two terminals of the first contact 51. The first contact 51 and the second contact 52 are linked, and the third contact 53 and the fourth contact 54 are linked.

Wherein, the main function of the pre-charge resistor 31 is to limit the current flow during circuit startup, so as to protect circuit components and equipment. Specifically the followings are included: limiting the large current surge during startup, limiting the charging speed of capacitors in the circuit, making the voltage rise more stable, preventing damage to circuit components due to excessively rapid voltage rise, extending circuit life, and improving circuit stability and reliability.

The pre-charge circuit 30 can be used to adjust the voltages of multiple battery clusters, effectively reducing the circulating current between battery clusters.

With continued reference to FIG. 2, a first fuse 11 is also connected in series in the main positive circuit 10; a second fuse 21 is connected in series in the main negative circuit 20.

The first fuse 11 and the second fuse 21 are electrical components configured to protect the circuit from overload and short circuit. When the current exceeds the fuse's rated value, the fuse wire will be blown, cutting off the circuit and preventing damage to or fire outbreak of equipment or wiring in the circuit , which is a form of passive protection.

The selection of fuses can be determined based on the circuit's rated current, rated voltage, and rated power, to ensure timely circuit disconnection in case of overload or short circuit.

In some examples, the first contact 51, the second contact 52, the third contact 53, and the fourth contact 54 are all mechanical contacts.

Mechanical contacts refer to mechanical switching devices configured to control electrical signals. When mechanical contacts are subjected to force or pressure, an action of connecting or disconnecting the circuit will be generated, thereby controlling the operation of electrical equipment. Mechanical contacts are typically made of metal materials, have high wear resistance and conductivity, and are commonly used in various electrical equipment and circuits.

In some examples, a shunt 22 is also connected in series in the main negative circuit 20.

The shunt 22 is used to divert the current in the circuit to its output terminal in a certain proportion, so as to measure, monitor, protect, and control the current in the circuit, thereby ensuring the normal operation and safety of the circuit. Specifically, the shunt 22 typically includes a resistor or other current sensor, through which current in the circuit is diverted to the shunt 22, and the actual current information in the circuit is obtained by measuring the current value at the output terminal of the shunt 22. By connecting the shunt 22, the current change condition in the circuit can also be monitored in real time, so as to timely detect abnormal conditions in the circuit (such as overload, short circuit, etc.) and take corresponding measures for protection or control the operating status of other devices or systems based on the current value.

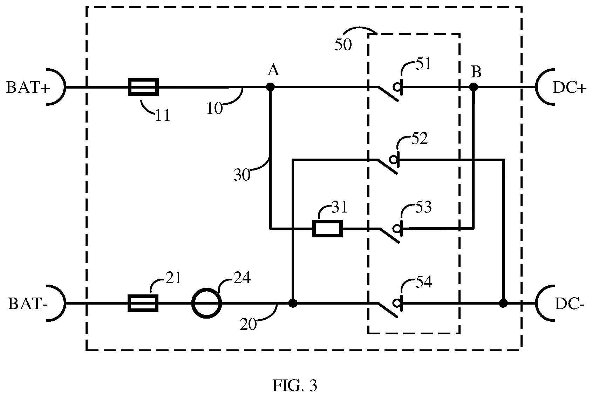

FIG. 3 is a schematic structural diagram of another high-voltage box provided in an example of the present application. As shown in FIG. 3, a Hall sensor 24 is also connected in series in the main negative circuit 20.

The Hall sensor 24 is used to replace the shunt 22 and can be used to detect current and determine the magnitude and direction of the current by measuring the magnetic field generated by the current, which plays an important role in power systems and electronic equipment.

In this example of the present application, in the high-voltage box, an integrated switch 50 is used to replace the four components in a traditional high-voltage box: main positive contactor 12, main negative contactor 23, pre-charge contactor 32, and circuit breaker 40, which reduces the number of components and combines the circuit on/off control and active circuit protection functions of the main positive contactor 12 and main negative contactor 23, the pre-charging function of the pre-charge contactor 32, and the passive circuit protection function of the circuit breaker 40. It also avoids problems of the contactor such as insufficient current tolerance, adhesion, and resin seal aging, eliminating the contactor's shortcomings, reducing maintenance workload, and improving system safety.

In addition, due to the integration of component functions, the internal space and wiring in the high-voltage box are saved. For example, the main wiring from the original circuit breaker 40 to the contactor is saved, the secondary wiring of the contactor is simplified, the internal space requirement of the high-voltage box is reduced, the volume of the high-voltage box is reduced, the installation becomes simpler, the wiring efficiency and maintenance efficiency are improved, and the production and maintenance costs are reduced.

In the example of the present application, due to the provision of the integrated switch 50, the high-voltage box can operate the battery control circuit under load, with the circuit functioning normally at 2C current. The high-voltage box can perform over 10,000 open/close operations without load, and can perform 1,000 open/close operations at 1C current. Furthermore, the system's short-circuit current withstand capability is increased from 12.6kA/2ms to 15kA/0.1s.

The integrated switch 50 is a DC-PV2 switch. Since DC-PV2 switch is non-polarized, it allows bidirectional current to pass through.

When the integrated switch 50 is used in the high-voltage box, no additional control or protection circuitry is required to handle the switch's load operation. Therefore, use of the high-voltage box of the present application simplifies the design and operation of the BMS program.

The present application provides an electrical control system for energy storage battery clusters, comprising: battery clusters connected in sequence, a high-voltage box, and an energy storage converter. The high-voltage box comprises a main positive circuit 10, a main negative circuit 20, and a pre-charge circuit 30. The high-voltage box comprises a pre-charge resistor 31 and an integrated switch 50. The integrated switch 50 is provided with a first contact 51, a second contact 52, a third contact 53, and a fourth contact 54.

The first contact 51 is connected to the main positive circuit 10. The second contact 52 and the fourth contact 54 are connected in parallel and then connected to the main negative circuit 20. The pre-charge resistor 31 and the third contact 53 are connected in series in the pre-charge circuit 30, and the pre-charge circuit 30 is connected in parallel to the two terminals of the first contact 51. The first contact 51 and the second contact 52 are linked, and the third contact 53 and the fourth contact 54 are linked.

In some examples, a first fuse 11 is also connected in series in the main positive circuit 10; a second fuse 21 is also connected in series in the main negative circuit 20.

In some examples, the first contact 51, the second contact 52, the third contact 53, and the fourth contact 54 are all mechanical contacts.

Optionally, a shunt 22 is also connected in series in the main negative circuit 20.

Optionally, a Hall sensor 24 is also connected in series in the main negative circuit 20.

In the electrical control system for energy storage battery clusters provided in this example, the structure of the high-voltage box and the function of each component in the high-voltage box are similar to those in the previous example, are conducive to improving the stability and reliability of the system and helps to promote further development of new energy vehicles and energy storage technology.

The present application also provides an electrical control method for energy storage battery clusters, which is applied to the electrical control system for energy storage battery clusters in the foregoing examples, with a BMS being used as the executing subject. The electrical control method for energy storage battery clusters of this example comprises the following steps:
S1. Determining the voltage difference between the highest voltage and the lowest voltage of the total voltages of battery clusters.

In this example, when the electrical control system for energy storage battery clusters works normally, after the BMS completes its power-on self-test, it first detects the total voltage of each battery cluster to determine the voltage difference between the highest voltage and the lowest voltage of the total voltages of battery clusters.

S2. Closing the first contact 51 and the second contact 52 when the voltage difference is less than or equal to a first preset threshold.

Specifically, if the voltage difference is less than or equal to the first preset threshold, it indicates that the voltage between each battery cluster is relatively balanced. When normal charging/discharging is started, the overall operating voltages of battery clusters will not fluctuate significantly. At this time, the first contact 51 and the second contact 52 can be closed.

After closing the first contact 51 and the second contact 52, the BMS can send a normal charging/discharging signal to the Power Conversion System (PCS) via communication. By acquiring the battery pack status information and the signals sent by the BMS, the PCS controller can perform protective charging/discharging of the battery to ensure safe operation of battery.

In some examples, when the pressure difference is greater than the first preset threshold and less than a second preset threshold, the first contact 51 and the second contact 52 are broken, and the third contact 53 and the fourth contact 54 are closed, until the pressure difference is less than or equal to the first preset threshold. Then, the first contact 51 and the second contact 52 are closed, and after a preset time, the third contact 53 and the fourth contact 54 are broken.

Specifically, if the voltage difference is greater than the first preset threshold but less than the second preset threshold, it indicates a relative voltage imbalance between battery clusters. During the startup of normal charging/discharging, the overall operating voltages of battery clusters are prone to significant fluctuations. The first contact 51 and the second contact 52 are broken and the third contact 53 and the fourth contact 54 are closed, to activate the inter-cluster pre-charge mode, so as to help balance the voltages between the battery clusters and ensure more stable overall operation of battery pack. When the voltage difference is less than or equal to the first preset threshold, it indicates that the pre-charging is completed.

After the pre-charging is completed, the first contact 51 and the second contact 52 are closed, and after a preset time, the third contact 53 and the fourth contact 54 are broken. The preset time is set to prevent simultaneous breaking of the first contact 51, the second contact 52, the third contact 53, and the fourth contact 54, which could lead to circuit break.

Optionally, if the voltage difference is greater than or equal to the second preset threshold, it is considered that the circuit has a fault and requires manual intervention for troubleshooting.

In some examples, after closing the third contact 53 and the fourth contact 54, the third contact 53 and the fourth contact 54 can also be broken if it is determined that a pre-charging fails.

For example, if the circuit has a fault, which will lead to pre-charging failure, at this time, the third contact 53 and the fourth contact 54 need to be broken to stop pre-charging. Pre-charging needs to be restarted after troubleshooting.

In some examples, after closing the first contact 51 and the second contact 52, the first contact 51 and the second contact 52 can also be broken if it is determined that the electrical control system for energy storage battery clusters has a fault.

In other words, during the normal charging/discharging process, if the electrical control system for energy storage battery clusters has a fault, the first contact 51 and the second contact 52 need to be broken to stop charging/discharging. After troubleshooting, the first contact 51 and the second contact 52 are closed again to resume normal charging/discharging.

Finally, it should be noted that the above examples are only used to illustrate the technical solutions of the present application, and are not intended to limit them. Although the present application has been described in detail with reference to the foregoing examples, those of ordinary skills in the art should understand that modifications can still be made to the technical solutions described in the foregoing examples, or equivalent replacements can be made to some or all of the technical features. These modifications or replacements do not make the essence of the corresponding technical solutions deviate from the scope of the technical solutions of the examples of the present application.

## Claims

1. A high-voltage box, **characterized in that**, the high-voltage box comprises a main positive circuit, a main negative circuit, and a pre-charge circuit, the high-voltage box comprises a pre-charge resistor and an integrated switch:
the integrated switch is provided with a first contact, a second contact, a third contact, and a fourth contact;
the first contact is connected to the main positive circuit, the second contact and the fourth contact are connected in parallel and then connected to the main negative circuit;
the pre-charge resistor and the third contact are connected in series in the pre-charge circuit, and the pre-charge circuit is connected in parallel to the two terminals of the first contact;
the first contact and the second contact are linked, and the third contact and the fourth contact are linked.

2. The high-voltage box according to claim 1, **characterized in that** a first fuse is connected in series in the main positive circuit; and a second fuse is connected in series in the main negative circuit.

3. The high-voltage box according to claim 1, **characterized in that** the first contact, the second contact, the third contact, and the fourth contact are all mechanical contacts.

4. The high-voltage box according to any of claims 1-3, **characterized in that** a shunt is connected in series in the main negative circuit.

5. The high-voltage box according to any of claims 1-3, **characterized in that** a Hall sensor is connected in series in the main negative circuit.

6. An electrical control system for energy storage battery clusters, **characterized in that**, the system comprises battery clusters connected in sequence, a high-voltage box and an energy storage converter, the high-voltage box comprises a main positive circuit, a main negative circuit and a pre-charge circuit, and the high-voltage box comprises a pre-charge resistor and an integrated switch;
the integrated switch is provided with a first contact, a second contact, a third contact, and a fourth contact;
the first contact is connected to the main positive circuit, the second contact and the fourth contact are connected in parallel and then connected to the main negative circuit;
the pre-charge resistor and the third contact are connected in series in the pre-charge circuit, and the pre-charge circuit is connected in parallel to two terminals of the first contact;
the first contact and the second contact are linked, and the third contact and the fourth contact are linked.

7. An electrical control method for energy storage battery clusters, **characterized in that** the method is applied to the electrical control system for energy storage battery clusters according to claim 6, and the method comprises:
determining the voltage difference between the highest voltage and the lowest voltage of the total voltages of the battery clusters; and
closing the first contact and the second contact when the voltage difference is less than or equal to a first preset threshold.

8. The method according to claim 7, **characterized in that** the method further comprises:
when the voltage difference is greater than the first preset threshold and less than a second preset threshold, breaking the first contact and the second contact, and closing the third contact and the fourth contact, until the voltage difference is less than or equal to the first preset threshold, then closing the first contact and the second contact, and after a present time, breaking the third contact and the fourth contact.

9. The method according to claim 8, **characterized in that** after closing the third contact and the fourth contact, the method further comprises:
breaking the third contact and the fourth contact when it is determined that pre-charging fails.

10. The method according to claim 7, **characterized in that** after closing the first contact and the second contact, the method further comprises:
breaking the first contact and the second contact when it is determined that the electrical control system for energy storage battery clusters has a fault.
